# EUROPEAN PATENT APPLICATION

(11) **EP 4 277 090 A1**
(43) Date of publication of application: **15.11.2023**
(21) Application number: 22752544.1
(22) Date of filing: 19.01.2022
(51) Int. Cl.: H02K 5/22

(54) **TERMINAL UNIT AND COMPRESSOR**

(30) Priority: 09.02.2021 JP 2021018908
(71) Applicant: MITSUBISHI HEAVY INDUSTRIES THERMAL SYSTEMS, LTD., Tokyo 100-8332 (JP)
(72) Inventor: YOGO, Ichiro, Tokyo 100-8332 (JP); UEDA, Kosuke, Tokyo 100-8332 (JP)
(74) Representative: Cabinet Beau de Loménie
(86) International application number: PCT/JP2022/001860
(87) International publication number: WO 2022/172712

(57) **Abstract**

The purpose of the present invention is to improve insulating properties. This terminal unit (30) comprises: a plate-shaped base unit (40); a plate-shaped insulation unit (51) and a fitting insulation unit (52) that cover the plate surface of the base unit; a terminal (70) that extends in the Z axis direction, which is the direction intersecting the plate surface of the base unit (40), and penetrates the base unit (40) and the plate-shaped insulation unit (51); and an upper cylinder insulation unit (53) that extends along the Z axis direction from the plate-shaped insulation unit (51) and covers the side surface of the terminal (70). The plate-shaped insulation unit (51) and the upper cylinder insulation unit (53) are formed integrally.

## Description

### Technical Field

The present disclosure relates to a terminal unit and a compressor.

### Background Art

A compressor in which both a compression mechanism for compressing a refrigerant and an electric motor for supplying a drive force to the compression mechanism are housed in a housing is known. In such a compressor, a power supply unit and the electric motor are connected to each other via a connection member to supply power to the electric motor from the power supply unit. Since the power supply unit is disposed outside the housing, an opening through which the connection member is inserted is formed in the housing.

PTL 1 discloses a compressor in which a stator coil is electrically connected to a motor drive circuit provided outside a housing via a connection device. In this compressor, a lead wire extends from the stator coil. Further, the lead wire is inserted through a through-hole formed in an end cover, and is led to the outside of an end cover.

### Citation List

### Patent Literature

[PTL 1] Japanese Unexamined Patent Application Publication No. 2006-291926

### Summary of Invention

### Technical Problem

Incidentally, there is a compressor in which a terminal is inserted through an opening of a housing. Since the lead wire is inserted through the opening as described above in a structure disclosed in PTL 1, a structure in which a terminal is inserted through an opening is not considered.

In a compressor in which a terminal is inserted through an opening of a housing, it is necessary to insulate the terminal to suppress the leakage of current flowing through the terminal. Since various problems occur in a case where current flowing through the terminal leaks, it is desired to improve the insulating property of the terminal.

The present disclosure has been made in consideration of such circumstances, and an object of the present disclosure is to provide a terminal unit and a compressor that can improve an insulating property.

### Solution to Problem

In order to achieve the object, a terminal unit and a compressor according to aspects of the present disclosure employ the following means.

A terminal unit according to an aspect of the present disclosure includes: a plate-like base part; a first insulating portion that covers a plate surface of the base part; a terminal that extends in a predetermined direction, which is a direction intersecting the plate surface of the base part, and penetrates the base part and the first insulating portion; and a second insulating portion that extends from the first insulating portion in the predetermined direction and covers a side surface of the terminal. The first insulating portion and the second insulating portion are integrally molded.

### Advantageous Effects of Invention

According to the present disclosure, it is possible to improve an insulating property.

### Brief Description of Drawings

Fig. 1 is a longitudinal sectional view of a compressor according to an embodiment of the present disclosure.
Fig. 2 is an enlarged view of a main portion (portion II) of Fig. 1.
Fig. 3 is a longitudinal sectional view of a terminal unit provided in the compressor shown in Fig. 1. Description of Embodiments

A terminal unit and a compressor according to an embodiment of the present disclosure will be described below with reference to the drawings.

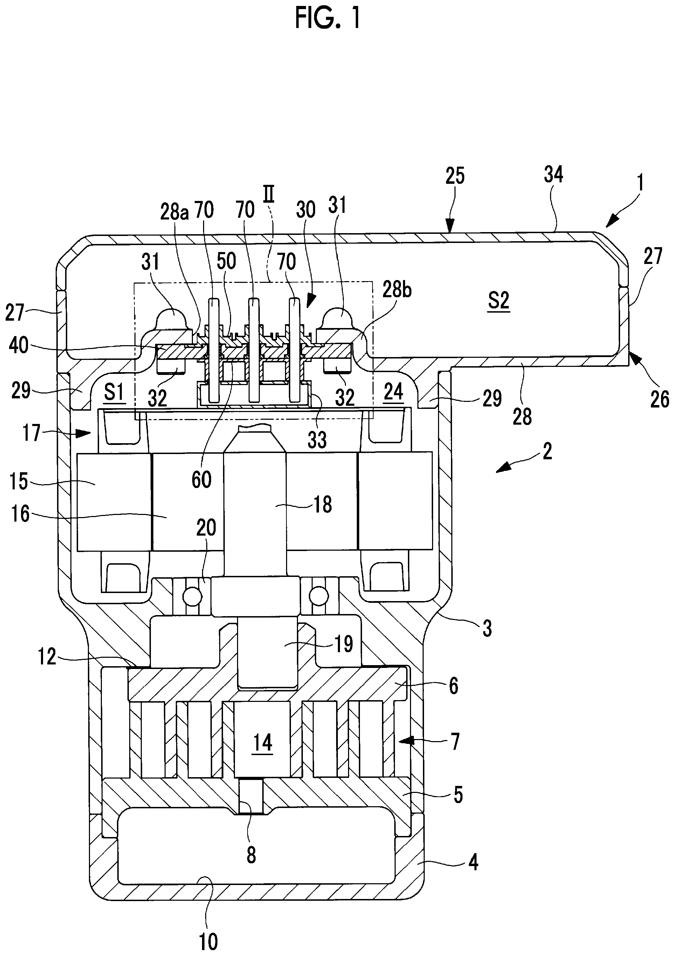

Fig. 1 shows a longitudinal sectional view of an electric compressor (compressor) 1 according to the present embodiment.

The electric compressor 1 according to the present embodiment is an inverter-integrated electric compressor in which an inverter (not shown) for driving a motor 17 is integrally built.

The electric compressor 1 includes a housing 2 that forms an outer shell, a scroll compression mechanism 7 that is housed in the housing 2, and a motor 17 that drives the scroll compression mechanism 7.

An internal space S1, which houses the scroll compression mechanism 7, the motor 17, and the like, is formed in the housing 2. The housing 2 is made of, for example, a metallic material. The housing 2 includes a cylindrical first housing 3 that extends along a central axis, and a second housing 4 that closes one end side (a lower end side in Fig. 1) of the first housing 3 in a direction of the central axis. That is, the first housing 3 defines the side of the internal space S1. Further, the second housing 4 defines the lower side of the internal space S1. The upper side of the internal space S1 is defined by an inverter housing unit 25. Details of the inverter housing unit 25 will be described later.

The scroll compression mechanism 7 is built in on one end side of the housing 2. The scroll compression mechanism 7 includes a pair of scrolls, that is, a fixed scroll 5 and an orbiting scroll 6. The scroll compression mechanism 7 compresses refrigerant gas. The high-pressure refrigerant gas compressed by the scroll compression mechanism 7 is discharged into a discharge chamber 10 via a discharge port 8. The discharge port 8 is formed at the center of the fixed scroll 5. The refrigerant gas discharged into the discharge chamber 10 is discharged to the outside of the electric compressor 1 via a discharge port (not shown) provided in the housing 2.

The fixed scroll 5 is fixed to the second housing 4 by fasteners (not shown), such as bolts 31. The orbiting scroll 6 is supported by a thrust bearing 12 via a rotation prevention mechanism (not shown) such that the orbiting scroll 6 can orbit. The orbiting scroll 6 orbits with respect to the fixed scroll 5.

The fixed scroll 5 and the orbiting scroll 6 are engaged with each other to mesh with each other. A compression chamber 14 is formed between the fixed scroll 5 and the orbiting scroll 6. In a case where the orbiting scroll 6 orbits (revolves) such that the volume of the compression chamber 14 is reduced from the outer peripheral side toward the central side, the scroll compression mechanism 7 compresses the refrigerant present in the compression chamber 14.

The motor 17 is built in on the other end side of the cylindrical housing 2. The motor 17 includes a stator 15 and a rotor 16. A drive shaft 18 is joined to the rotor 16. The drive shaft 18 is rotatably supported by a bearing 20 that is installed near a central portion in the housing 2 and a bearing (not shown) that is installed near the other end portion in the housing 2. A crank pin 19 is provided at one end of the drive shaft 18. The central axis of the drive shaft 18 and the central axis of the crank pin 19 are eccentric. The crank pin 19 is connected to the orbiting scroll 6. That is, the drive shaft 18 connects the motor 17 and the scroll compression mechanism 7. The motor 17 causes the orbiting scroll 6 to orbit via the drive shaft 18.

Further, a driven crank mechanism (not shown) is provided between the crank pin 19 and the orbiting scroll 6. The driven crank mechanism makes the orbiting radius of the orbiting scroll 6 variable. Examples of the driven crank mechanism include a swing link type driven crank mechanism.

Furthermore, the motor 17 and the inverter are connected to each other via a terminal unit 30. Details of the terminal unit 30 will be described later.

A suction port (not shown) used to suck low-pressure refrigerant gas discharged from a refrigeration cycle is provided on the other end portion side of the housing 2. The refrigerant gas sucked from the suction port flows into a space portion 24 between the second housing 4 and one end of the motor 17. The low-pressure refrigerant gas having flowed into the space portion 24 fills the housing 2. Specifically, the low-pressure refrigerant gas having flowed into the space portion 24 flows toward the scroll compression mechanism 7, is sucked into the scroll compression mechanism 7, and is compressed. A lubricant is contained in the refrigerant gas. The lubricant contained in the refrigerant gas is supplied to the scroll compression mechanism 7 and the rotation prevention mechanism together with the refrigerant gas to lubricate each mechanism.

The inverter housing unit 25, which houses the inverter, is provided on the other end side (an upper end side in Fig. 1) of the housing 2 in a direction along the central axis. The inverter converts DC power, which is supplied from an external battery or the like, into three-phase AC power having a required frequency and applies the three-phase AC power to the motor 17 via terminals 70 to drive the motor 17.

For example, the inverter includes: a power board on which a switching circuit including a plurality of power transistors, such as IGBT, which is a semiconductor switching element for power, is mounted; a control board on which a control communication circuit including an element, which operates at a low voltage, such as a CPU for controlling the switching circuit and the like, on the basis of control signals input from the outside is mounted; and electrical components such as a smoothing capacitor and a coil forming a filter circuit for removing noise.

A housing space S2 in which the inverter is housed is formed in the inverter housing unit 25. The inverter housing unit 25 is made of, for example, a metallic material. The inverter housing unit 25 includes a first inverter housing 26 that defines a lower portion of the housing space S2, and a second inverter housing 34 that defines an upper portion of the housing space S2.

The first inverter housing 26 is integrally provided with a side wall part 27 that defines the side of the housing space S2, a bottom surface part 28 that defines the lower side of the housing space S2, and a protrusion part 29 that protrudes downward from a lower surface of the bottom surface part 28. The side wall part 27 is erected at an outer edge portion of the bottom surface part 28.

The bottom surface part 28 closes the other end (upper end) side of the first housing 3. That is, the lower surface of the bottom surface part 28 defines the upper side of the internal space S1. An opening 28a is formed in the bottom surface part 28. The opening 28a connects the internal space S1 and the housing space S2. This opening 28a is provided with the terminal unit 30. Further, the bottom surface part 28 includes a bulging portion 28b that bulges upward. The opening 28a is formed at the center of the bulging portion 28b. A plurality of first bolt insertion holes (not shown) through which bolts 31 are inserted are formed at the bulging portion 28b.

The protrusion part 29 is a cylindrical member. An outer peripheral surface of the protrusion part 29 is in contact with an inner peripheral surface of an opening formed at an upper end of the first housing 3. The protrusion part 29 is fitted into the opening formed at the upper end of the first housing 3.

The second inverter housing 34 covers the housing space S2 from above. A lower end of the second inverter housing 34 is connected to an upper end of the side wall part 27.

Next, details of the terminal unit 30 will be described. In the following description and drawings, a vertical direction will be referred to as a Z-axis direction and a direction, which is orthogonal to the Z-axis direction and in which three terminals 70 are lined up, will be referred to as an X-axis direction.

The terminal unit 30 connects the motor 17 and the inverter, and closes the opening 28a formed in the bottom surface part 28 of the second inverter housing 34.

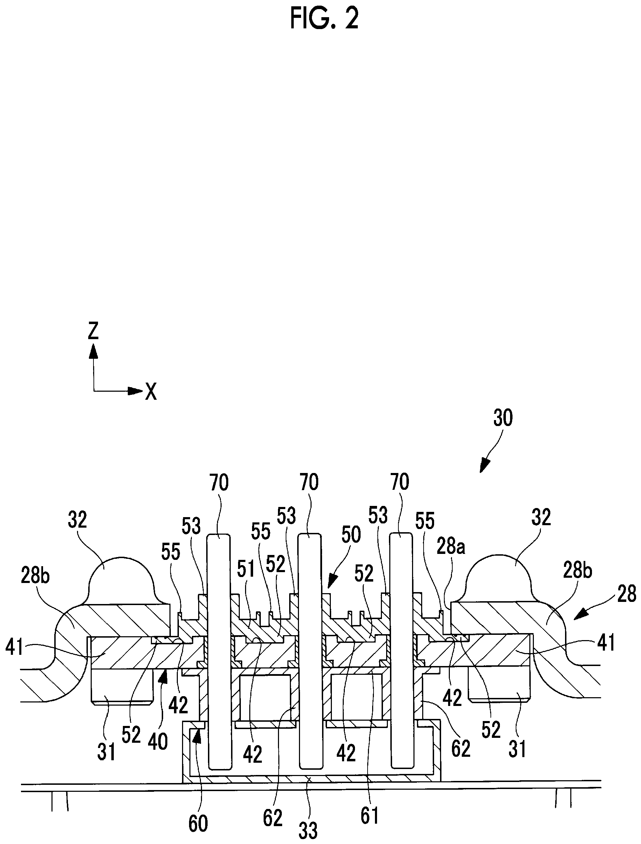

As shown in Fig. 2, the terminal unit 30 includes a plate-like base part 40 that covers the opening 28a from below, an upper insulating member 50 that is provided on an upper surface of the base part 40, and a lower insulating member 60 that is provided on a lower surface of the base part 40. Further, the terminal unit 30 includes three terminals 70 that penetrate the base part 40, the upper insulating member 50, and the lower insulating member 60. Furthermore, the terminal unit 30 is fixed to the inverter housing unit 25 by a plurality of bolts 31. The plurality of bolts 31 are arranged to surround the opening 28a. Each of the bolts 31 is inserted through the first bolt insertion hole and a second bolt insertion hole.

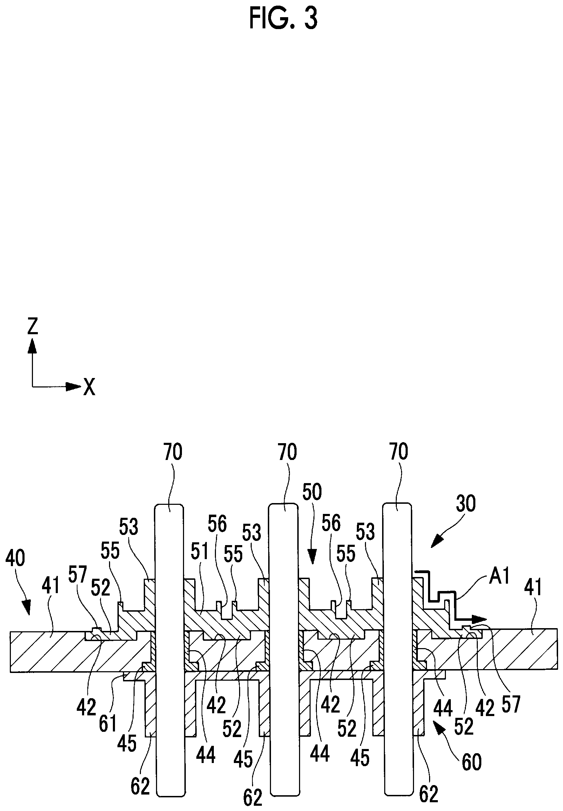

The base part 40 is made of a metallic material. As shown in Figs. 2 and 3, the base part 40 is a flat plate-like member. A fixing portion 41 (exposed portion) is provided at an outer edge portion of the base part 40. The fixing portion 41 is formed to have a flat upper surface. The fixing portion 41 is not covered with the upper insulating member 50. That is, the fixing portion 41 is exposed from the upper insulating member 50. The upper surface of the fixing portion 41 is in surface contact with a lower surface of the bulging portion 28b of the first inverter housing 26. Second bolt insertion holes (not shown) penetrating in a plate thickness direction are formed in the fixing portion 41. The bolts 31 are inserted through the second bolt insertion holes.

Further, a plurality of (for example, four in the present embodiment) recessed portions 42, which are recessed downward, are formed at a central portion of the upper surface of the base part 40. The plurality of recessed portions 42 are arranged side by side at regular intervals in the X-axis direction. Fitting insulating portions 52 of the upper insulating member 50 to be described later are fitted into the recessed portions 42. A part of the recessed portions 42 disposed at both ends in the X-axis direction overlap the bulging portion 28b as viewed in a plan view.

A terminal through-hole penetrating in the plate thickness direction is formed in the base part 40 between the adjacent recessed portions 42. That is, three terminal through-holes are formed in the present embodiment. The three terminal through-holes are arranged side by side at predetermined intervals in the X-axis direction. A cylindrical member 44 (see Fig. 3) made of a glass material is fitted into each terminal through-hole. An inner peripheral surface of the terminal through-hole and an outer peripheral surface of the cylindrical member 44 are in contact with each other. A flange portion 45 extending outward in a radial direction is provided at a lower end portion of the cylindrical member 44. The terminal 70 is inserted through the inside of the cylindrical member 44. An inner peripheral surface of the cylindrical member 44 and an outer peripheral surface of the terminal 70 are in contact with each other. The terminal 70 is inserted through the terminal through-hole via the cylindrical member 44. The shape of the cylindrical member 44 is not limited to the shape described in the present embodiment. For example, the flange portion 45 may be omitted.

The upper surface of the base part 40 is covered with the upper insulating member 50. Specifically, an upper surface of a portion of the base part 40 other than the fixing portion 41 is covered with the upper insulating member 50.

Step sections, which are recessed upward, are formed on the lower surface of the base part 40. The step section is fitted to the flange portion 45 of the cylindrical member 44. A central portion of the lower surface of the base part 40 is covered with the lower insulating member 60. In a case where the flange portions 45 are not present on the cylindrical members 44, the step sections may not be formed.

The upper insulating member 50 is made of an insulating rubber material (for example, hydrogenated nitrile rubber (HNBR)). That is, the upper insulating member 50 is made of an elastic material having an elastic modulus higher than the elastic modulus of metal. The material of the upper insulating member 50 is not limited to HNBR. The upper insulating member 50 includes a plate-like insulating portion (first insulating portion) 51 that covers the upper surface of the base part 40, fitting insulating portions (first insulating portion) 52 that protrude downward from a lower surface of the plate-like insulating portion 51, and three upper cylindrical insulating portions (second insulating portion) 53 that extend upward from the plate-like insulating portion 51. The plate-like insulating portion 51, the upper cylindrical insulating portions 53, and the fitting insulating portions 52 are integrally molded. Specifically, the plate-like insulating portion 51, the upper cylindrical insulating portions 53, and the fitting insulating portions 52 are not members that are separately manufactured and fixed to each other, but are molded as an integral body by, for example, injection molding or the like.

The plate-like insulating portion 51 is placed on the upper surface of the base part 40. That is, the lower surface of the plate-like insulating portion 51 is in surface contact with the upper surface of the base part 40. Three upper through-holes penetrating in the plate thickness direction are formed in the plate-like insulating portion 51. The three upper through-holes are arranged side by side at predetermined intervals in the X-axis direction. Upper ends of the upper through-holes are connected to spaces formed in the upper cylindrical insulating portions 53. Further, lower ends of the upper through-holes are connected to spaces formed in the cylindrical members 44. The terminals 70 are inserted through the upper through-holes.

Furthermore, the plate-like insulating portion 51 includes a plurality of insulating protrusions 55 that protrude upward from the upper surface of the plate-like insulating portion 51. Each of the insulating protrusions 55 is erected to surround the upper cylindrical insulating portion 53. The insulating protrusion 55 is disposed outside the upper cylindrical insulating portion 53 in a radial direction, and is provided over the entire region of the upper cylindrical insulating portion 53 in a circumferential direction. Upper ends of the insulating protrusions 55 are positioned below an upper end of the bulging portion 28b. Further, the plate-like insulating portion 51 includes insulating recessed portions 56 each of which is formed between the adjacent insulating protrusions 55. The insulating recessed portions 56 are recessed downward from the upper surface of the plate-like insulating portion 51.

The three upper cylindrical insulating portions 53 are arranged side by side at predetermined intervals in the X-axis direction. Each upper cylindrical portion insulating portion covers the side surface of the terminal 70. Specifically, each upper cylindrical insulating portion 53 covers a partial region of the side surface of the terminal 70 in the vertical direction. Upper ends of the upper cylindrical insulating portions 53 are positioned below the upper end of the bulging portion 28b.

A plurality of fitting insulating portions 52 are provided. Each fitting insulating portion 52 is fitted into the recessed portion 42. In other words, each fitting insulating portion 52 covers the upper surface and the inner peripheral surface of the recessed portion 42. Each of the fitting insulating portions 52, which are fitted into the recessed portions 42 disposed at both ends in the X-axis direction, integrally includes a sealing protrusion 57 (see Fig. 3) that protrudes upward from the upper surface of the fitting insulating portion 52. The sealing protrusion 57 is provided over the entire region of the outer edge portion in the circumferential direction. The sealing protrusions 57 are provided at positions on the upper surface of the fitting insulating portion 52 facing the lower surface of the bulging portion 28b. As shown in Fig. 2, the sealing protrusions 57 are deformed to be crushed by being pressed against the lower surface of the bulging portion 28b in a state where the terminal unit 30 is attached to the inverter housing unit 25.

The height of the recessed portion 42 and the height of the fitting insulating portion 52 are substantially equal to each other. That is, the fitting insulating portion 52 is formed not to protrude upward from the recessed portion 42. In other words, the upper surface of the fitting insulating portion 52 and the upper surface of the fixing portion 41 of the base part 40 are flush with each other.

The lower insulating member 60 is made of an insulating rubber material (for example, hydrogenated nitrile rubber (HNBR)). That is, the lower insulating member 60 is made of an elastic material having an elastic modulus higher than the elastic modulus of metal. The material of the lower insulating member 60 is not limited to HNBR. The lower insulating member 60 includes a flat plate-insulating portion 61 that covers the lower surface of the base part 40, and three lower cylindrical insulating portions 62 that extend downward from a lower surface of the flat plate-insulating portion 61. The flat plate-insulating portion 61 and the lower cylindrical insulating portions 62 are integrally molded. Specifically, the flat plate-insulating portion 61 and the lower cylindrical insulating portions 62 are not members that are separately manufactured and fixed to each other, but are molded as an integral body by, for example, injection molding or the like.

The lower surface of the flat plate-insulating portion 61 is in surface contact with the upper surface of the base part 40. The flat plate-insulating portion 61 covers only the central portion of the lower surface of the base part 40. That is, the flat plate-insulating portion 61 does not cover the outer edge portion of the lower surface of the base part 40. Nuts 32, which are screwed to the bolts 31, are provided at the outer edge portion of the lower surface of the base part 40.

Three lower through-holes penetrating in the plate thickness direction are formed in the flat plate-insulating portion 61. The three lower through-holes are arranged side by side at predetermined intervals in the X-axis direction. Lower ends of the lower through-holes are connected to spaces formed in the lower cylindrical insulating portions 62. Further, upper ends of the lower through-holes are connected to spaces formed in the cylindrical members 44. The terminals 70 are inserted through the lower through-holes.

The lower cylindrical insulating portions 62 are arranged side by side at predetermined intervals in the X-axis direction. Each upper cylindrical portion insulating portion covers the side surface of the terminal 70. Specifically, each lower cylindrical insulating portion 62 covers the entire region of the side surface of the terminal 70 between a stator terminal cover 33 and the flat plate-insulating portion 61. Lower ends of the lower cylindrical insulating portions 62 are in contact with an upper surface of the stator terminal cover 33. The lower cylindrical insulating portions 62 seal between the terminals 70 and a stator terminal (not shown). Further, the lower cylindrical insulating portion 62 insulates the terminal 70.

The three terminals 70 are arranged side by side at predetermined intervals in the X-axis direction. Each terminal 70 extends in the vertical direction (Z-axis direction). Each terminal 70 is inserted through the upper cylindrical insulating portion 53, the upper through-hole, the terminal through-hole (cylindrical member 44), the lower through-hole, and the lower cylindrical insulating portion 62. Upper portions of the terminals 70 are positioned in the housing space S2 formed in the inverter housing unit 25. Lower portions of the terminals 70 are positioned in the internal space S1 of the housing 2. Lower end portions of the terminals 70 are disposed in the stator terminal cover 33 disposed above the stator 15.

Upper end portions of the terminals 70 are connected to the inverter. Further, lower end portions of the terminal 70 are connected to the stator 15. The terminals 70, the inverter, and the stator 15 may be directly connected to each other or may be indirectly connected to each other via a lead wire or the like.

Actions and effects to be described below will be obtained in the present embodiment.

The plate-like insulating portion 51, which covers the plate surface of the base part 40, and the fitting insulating portions 52 are provided in the present embodiment. Accordingly, a creepage distance between an exposed portion of the terminal 70 and the base part 40 is a distance bypassing the plate-like insulating portion 51 and the fitting insulating portion 52. Therefore, a creepage distance between the exposed portion of the terminal 70 and the base part 40 can be increased as compared to a case where the plate-like insulating portion 51 and the fitting insulating portion 52 are not provided. Accordingly, an insulating property can be improved.

Further, the flat plate-insulating portion 61 and the lower cylindrical insulating portions 62 are integrally molded in the present embodiment. That is, the entire lower insulating member 60 is integrally molded. Accordingly, the number of components can be reduced as compared to a case where the flat plate-insulating portion 61 and the lower cylindrical insulating portions 62 are separately manufactured. Therefore, manufacturing work can be facilitated. Furthermore, manufacturing costs can be reduced.

Further, in the present embodiment, the plate-like insulating portion 51, the upper cylindrical insulating portions 53, and the fitting insulating portions 52 are integrally molded. That is, the entire upper insulating member 50 is integrally molded. Accordingly, the number of components can be reduced as compared to a case where the plate-like insulating portion 51, the upper cylindrical insulating portions 53, and the fitting insulating portions 52 are separately manufactured. Therefore, manufacturing work can be facilitated. Furthermore, manufacturing costs can be reduced.

Furthermore, the internal space S1 formed in the housing 2 is filled with refrigerant gas. For this reason, it is necessary to seal the opening 28a, which is formed in the inverter housing unit 25, to suppress the leakage of refrigerant gas from the internal space S1 to the housing space S2.

In the present embodiment, the fitting insulating portions 52 include the sealing protrusions 57. Accordingly, in a case where the terminal unit 30 is fixed to the housing (fixing target) 2, the sealing protrusions 57 are pressed against the housing 2 and are deformed to be crushed. That is, the sealing protrusions 57 are deformed to be in close contact with the housing 2. Therefore, sealing performance between the housing 2 (Specifically, the bulging portion 28b) and the terminal unit 30 (Specifically, the fitting insulating portions 52) can be improved.

As described above, in the present embodiment, portions contributing to sealing and portions contributing to insulation are integrally molded in the upper insulating member 50 and the lower insulating member 60. Accordingly, the number of components can be reduced as compared to a case where members contributing to sealing and members contributing to insulation are separately manufactured. Therefore, manufacturing work can be facilitated and manufacturing costs can be reduced.

Further, in the present embodiment, both the upper insulating member 50 and the lower insulating member 60 are made of a relatively inexpensive rubber material. Accordingly, costs can be reduced as compared to a case where an expensive material (for example, ceramic) is used for the insulation of the terminals 70 and the sealing of the opening 28a.

Further, in the present embodiment, the base part 40 includes the fixing portion 41 that is exposed from the upper insulating member 50. Furthermore, the base part 40 is made of a metallic material. Moreover, the fixing portion 41 is in surface contact with the housing 2 and the fixing portion 41 and the housing 2 are fixed to each other by the bolts 31. As described above, in the present embodiment, the fixing portion 41 and the housing 2 are in contact with each other without using a material (for example, a rubber material or the like) having an elastic modulus higher than the elastic modulus of a metallic material. Accordingly, it is possible to make it difficult to reduce the axial forces of the bolts 31 that fasten the fixing portion 41 to the housing 2. Therefore, the base part 40 and the housing 2 can be firmly fixed to each other. Accordingly, a decrease in sealing performance between the base part 40 and the housing 2 can be suppressed.

Further, the upper insulating member 50 and the lower insulating member 60 are made of a rubber material in the present embodiment. Accordingly, for example, in a case where the terminal unit 30 is fixed to the housing 2, the upper insulating member 50 and the lower insulating member 60 are pressed against the housing 2, so that the upper insulating member 50 and the lower insulating member 60, which are pressed, are deformed to be in close contact with the housing 2. Therefore, sealing performance between the housing 2 and the terminal unit 30 can be improved.

Furthermore, the plate-like insulating portion 51 includes the insulating protrusions 55 in the present embodiment. Accordingly, a creepage distance between the terminal 70 and the base part 40 is a distance bypassing the insulating protrusion 55 as shown by an arrow A1 shown in Fig. 3. Therefore, a creepage distance between the terminal 70 and the base part 40 can be increased as compared to a case where the insulating protrusion 55 is not provided. Accordingly, an insulating property can be improved.

The present disclosure is not limited to the invention according to each embodiment described above, and can be appropriately modified without departing from the scope of the present disclosure.

For example, an example in which the upper insulating member 50 and the lower insulating member 60 are made of HNBR has been described in the embodiment, but the present disclosure is not limited thereto. For example, the lower insulating member 60, which is in contact with a refrigerant during the operation of the electric compressor 1, may be made of HNBR, and the upper insulating member 50, which is less likely to be in contact with a refrigerant during the operation, may be made of silicone rubber.

Further, an example in which the terminal unit 30 is fixed to be in contact with the lower surface of the bottom surface part 28 of the first inverter housing 26 has been described in the embodiment. That is, an example in which the terminal unit 30 is fixed to the first inverter housing 26 such that the base part 40 of the terminal unit 30 is positioned on a refrigerant side (in other words, in the internal space S1 of the housing 2) has been described. However, the present disclosure is not limited thereto. For example, the terminal unit 30 may be fixed to be in contact with the upper surface of the bottom surface part 28 of the first inverter housing 26. That is, the terminal unit 30 may be fixed to the first inverter housing 26 such that the base part 40 of the terminal unit 30 is positioned on an atmosphere side (in other words, in the housing space S2 of the inverter housing unit 25).

The terminal unit and the compressor described in the embodiment mentioned above are grasped, for example, as follows.

A terminal unit according to an aspect of the present disclosure includes: a plate-like base part (40); a first insulating portion (51, 52) that covers a plate surface of the base part; a terminal (70) that extends in a predetermined direction (Z-axis direction), which is a direction intersecting the plate surface of the base part, and penetrates the base part and the first insulating portion; and a second insulating portion (53) that extends from the first insulating portion in the predetermined direction and covers a side surface of the terminal. The first insulating portion and the second insulating portion are integrally molded.

In the above-mentioned configuration, the first insulating portion covering the plate surface of the base part is provided. Accordingly, even in a case where a part of the terminal is exposed from the second insulating portion, a creepage distance between an exposed portion of the terminal and the base part is a distance bypassing the first insulating portion. Therefore, a creepage distance between the exposed portion of the terminal and the base part can be increased as compared to a case where the first insulating portion is not provided. Accordingly, an insulating property can be improved.

Further, the first insulating portion and the second insulating portion are integrally molded in the above-mentioned configuration. Accordingly, the number of components can be reduced as compared to a case where the first insulating portion and the second insulating portion are separately manufactured. Therefore, manufacturing work can be facilitated. Furthermore, manufacturing costs can be reduced.

Furthermore, in the terminal unit according to the aspect of the present disclosure, the first insulating portion includes a sealing protrusion (57) that is provided over an entire region of an outer edge portion of the first insulating portion in a circumferential direction and protrudes from a surface of the first insulating portion, and the sealing protrusion is made of an elastic material.

In the above-mentioned configuration, the first insulating portion includes the sealing protrusion made of the elastic material. Accordingly, for example, in a case where the terminal unit is fixed to a fixing target, the sealing protrusion is deformed to be crushed by being pressed against the fixing target. That is, the sealing protrusion is deformed to be in close contact with the fixing target. Therefore, sealing performance between the fixing target and the terminal unit can be improved.

Further, in the terminal unit according to the aspect of the present disclosure, the base part is made of a metallic material and the base part includes an exposed portion (41) that is exposed from the first insulating portion.

In the above-mentioned configuration, the base part includes the exposed portion that is exposed from the first insulating portion. Furthermore, the base part is made of a metallic material.

For example, in a case where the terminal unit is fixed to the fixing target, the exposed portion may be in contact with the fixing target and the exposed portion and the fixing target may be fixed to each other by a fastener. In this case, in the above-mentioned configuration, the exposed portion and the fixing target are in contact with each other without using a material (for example, a rubber material or the like) having an elastic modulus higher than the elastic modulus of a metallic material. Accordingly, it is possible to make it difficult to reduce the axial force of the fastener that fastens the exposed portion to the fixing target. Therefore, the base part and the fixing target can be firmly fixed to each other. Accordingly, a decrease in sealing performance between the base part and the fixing target can be suppressed.

Further, in the terminal unit according to the aspect of the present disclosure, at least one of the first insulating portion or the second insulating portion is made of an elastic material.

In the above-mentioned configuration, at least one of the first insulating portion or the second insulating portion is made of the elastic material. Accordingly, for example, in a case where the terminal unit is fixed to the fixing target, the first insulating portion or the second insulating portion made of the elastic material is pressed against the fixing target, so that the first insulating portion or the second insulating portion, which is pressed, is deformed to be in close contact with the fixing target. Therefore, sealing performance between the fixing target and the terminal unit can be improved.

Examples of the elastic material include materials (for example, a rubber material, a resin material, and the like) having an elastic modulus higher than the elastic modulus of metal.

Further, in the terminal unit according to the aspect of the present disclosure, the first insulating portion includes an insulating protrusion (55) that protrudes from a surface of the first insulating portion.

In the above-mentioned configuration, the first insulating portion includes the insulating protrusion. Accordingly, a creepage distance between the exposed portion of the terminal and the base part is a distance bypassing the insulating protrusion. Therefore, a creepage distance between the exposed portion of the terminal and the base part can be increased as compared to a case where the insulating protrusion is not provided. Accordingly, an insulating property can be improved.

A compressor according to an aspect of the present disclosure includes the terminal unit according to any one of the above.

### Reference Signs List

1: electric compressor (compressor)
2: housing
3: first housing
4: second housing
5: fixed scroll
6: orbiting scroll
7: scroll compression mechanism
8: discharge port
10: discharge chamber
12: thrust bearing
14: compression chamber
15: stator
16: rotor
17: motor
18: drive shaft
19: crank pin
20: bearing
24: space portion
25: inverter housing unit
26: first inverter housing
27: side wall part
28: bottom surface part
28a: opening
28b: bulging portion
29: protrusion part
30: terminal unit
31: bolt
32: nut
33: stator terminal cover
34: second inverter housing
40: base part
41: fixing portion
42: recessed portion
44: cylindrical member
45: flange portion
50: upper insulating member
51: plate-like insulating portion (first insulating portion)
52: fitting insulating portion (first insulating portion)
53: upper cylindrical insulating portion (second insulating portion)
55: insulating protrusion
56: insulating recessed portion
57: sealing protrusion
60: lower insulating member
61: flat plate-insulating portion
62: lower cylindrical insulating portion
70: terminal
S1: internal space
S2: housing space

## Claims

1. A terminal unit comprising:
a plate-like base part;
a first insulating portion that covers a plate surface of the base part;
a terminal that extends in a predetermined direction, which is a direction intersecting the plate surface of the base part, and penetrates the base part and the first insulating portion; and
a second insulating portion that extends from the first insulating portion in the predetermined direction and covers a side surface of the terminal,
wherein the first insulating portion and the second insulating portion are integrally molded.

2. The terminal unit according to Claim 1,
wherein the first insulating portion includes a sealing protrusion that is provided over an entire region of an outer edge portion of the first insulating portion in a circumferential direction and protrudes from a surface of the first insulating portion, and
the sealing protrusion is made of an elastic material.

3. The terminal unit according to Claim 1 or 2,
wherein the base part is made of a metallic material, and
the base part includes an exposed portion that is exposed from the first insulating portion.

4. The terminal unit according to any one of Claims 1 to 3,
wherein at least one of the first insulating portion or the second insulating portion is made of an elastic material.

5. The terminal unit according to any one of Claims 1 to 4,
wherein the first insulating portion includes an insulating protrusion that protrudes from a surface of the first insulating portion.

6. A compressor comprising:
the terminal unit according to any one of Claims 1 to 5.
